# EUROPÄISCHE PATENTSCHRIFT

(11) **EP 2 936 628 B1**
(45) Veröffentlichungstag und Bekanntmachung des Hinweises auf die Patenterteilung: **11.01.2017**
(21) Anmeldenummer: 13826554.1
(22) Anmeldetag: 27.11.2013
(51) Int. Cl.: H01S 3/16, H01S 3/0933, H04B 10/70, H04B 10/50, H01S 5/026, H01L 33/00, H01L 33/04, H01L 33/06, H01L 33/32, H04L 9/08

(54) **MASSENFERTIGUNGSTAUGLICHE EINZELPHOTONENQUELLE UND HERSTELLUNGSVERFAHREN**
INDIVIDUAL PHOTON SOURCE SUITABLE FOR MASS PRODUCTION AND PRODUCTION METHOD
SOURCE DE PHOTONS UNIQUES SE PRÊTANT À LA PRODUCTION EN SÉRIE, ET PROCÉDÉ DE FABRICATION

(30) Priorität: 20.12.2012 DE 102012025088
(43) Veröffentlichungstag der Anmeldung: 28.10.2015
(73) Patentinhaber: Forschungszentrum Jülich GmbH, 52425 Jülich (DE)
(72) Erfinder: HARDTDEGEN, Hilde, 52064 Aachen (DE); MIKULICS, Martin, 52428 Jülich (DE)
(86) Internationale Anmeldenummer: PCT/DE2013/000725
(87) Internationale Veröffentlichungsnummer: WO 2014/094705

(56) Entgegenhaltungen:
- WO-A2-2007/062625
- US-A1- 2003 152 228
- US-A1- 2004 151 461
- US-A1- 2005 253 152
- US-A1- 2012 112 165

## Beschreibung

Die Erfindung betrifft eine Einzelphotonenquelle und ein Herstellungsverfahren für Einzelphotonenquellen.

### Stand der Technik

Für spektroskopische Anwendungen und insbesondere für die sichere Übermittlung quantenkryptographischer Schlüssel sind Photonenquellen erforderlich, die zu einem definierten Zeitpunkt auf ein elektrisches Signal hin einzelne Photonen liefern. Leuchtdioden (LED) lassen sich gut miniaturisieren, so dass sie sehr schnell schalten und elektrisch zur Emission sehr kurzer Lichtpulse angeregt werden können. Sie emittieren jedoch so viele Photonen pro Zeiteinheit, dass innerhalb der technisch minimal möglichen Pulsdauer zwar nur wenige Photonen emittiert werden, jedoch immer noch deutlich mehr als eins. Die Genauigkeit der Spektroskopie bzw. die absolute Sicherheit der Schlüsselübermittlung sind umso mehr eingeschränkt, je mehr Photonen pro Lichtpuls emittiert werden.

In einigen aktiven Festkörpern treten Quanteneffekte auf, die bewirken, dass bei einer elektrischen oder optischen Anregung zu einem gegebenen Zeitpunkt immer nur ein strahlender Übergang stattfindet, bei dem ein Photon frei wird. Das bedeutet, dass man ein Zeitintervall definieren kann, in dem nur jeweils ein einziges Photon emittiert und somit die gestellte Anforderung perfekt erfüllt wird. Ein solcher Übergang kann beispielsweise eine Rekombination eines Elektrons und eines Lochs in einem Halbleiter sein, die sich jeweils erst nach der Emission eines Photons erneut anregen lässt. Diese Quanteneffekte setzen jedoch voraus, dass der aktive Festkörper nanoskalige Dimensionen aufweist. Dies macht es nachteilig sehr schwierig, einen solchen aktiven Festkörper zwecks Anregung elektrisch zu kontaktieren. Der Umweg über eine optische Anregung macht eine separate Anregungseinheit erforderlich, die ein elektrisches Signal in Licht für die Anregung umwandelt. An eine rentable Massenfertigung von Einzelphotonenquellen, die jeweils auf eine elektrische Anregung hin genau ein Photon emittieren, ist auf beiden Wegen nicht zu denken.

Einzelphotonenquellen sind aus den Dokumenten WO2007/062625, US2003/152228 und US2012/112165 bekannt.

### Aufgabe und Lösung

Es ist daher die Aufgabe der Erfindung, Einzelphotonenquellen, die auf eine elektrische Anregung hin genau ein Photon emittieren, für die Massenfertigung tauglich zu machen. Diese Aufgabe wird erfindungsgemäß gelöst durch eine Einzelphotonenquelle gemäß Hauptanspruch sowie durch ein Herstellungsverfahren gemäß Nebenanspruch. Weitere vorteilhafte Ausgestaltungen ergeben sich jeweils aus den darauf rückbezogenen Unteransprüchen.

### Gegenstand der Erfindung

Im Rahmen der Erfindung wurde eine Einzelphotonenquelle entwickelt. Diese umfasst mindestens einen aktiven Festkörper, der bei Anregung mit Licht, dessen Photonen jeweils eine Anregungsenergie aufweisen, innerhalb einer vorgegebenen Zeitspanne ein einzelnes Photon einer geringeren Emissionsenergie emittiert. Die Dauer dieser Zeitspanne hängt von der konkreten Anwendung ab, insbesondere von der gewünschten Datenrate (Übertragungsgeschwindigkeit) bei einer Datenübertragung. Sie kann beispielsweise aus einem Bereich zwischen 1 ps und 100 ms gewählt werden. Sollen etwa ultraschnell Daten übertragen werden, so können die derzeit im Labormaßstab mit Hilfe von Femtosekunden-Lasern erzeugbaren Lichtpulse der Größenordnung 1 ps als Anregungspulse für die Emission verwendet werden; es ist dann sinnvoll, wenn der aktive Festkörper in dieser einen Pikosekunde genau ein Photon emittiert. Bei der derzeitigen optischen Datenübertragung im kommerziellen Maßstab dauern die verwendeten Lichtpulse in der Größenordnung 1 ns. Bei der Quantenkryptographie wiederum kommt es darauf an, einen nur wenige hundert bis wenige tausend Bit langen Schlüssel zuverlässig zu übertragen. Hier kann es sinnvoll sein, wenn der aktive Festkörper auch bei einer relativ langen Anregung von 1-100 ms Dauer nur ein einzelnes Photon emittiert.

Erfindungsgemäß ist der aktive Festkörper auf einer Oberfläche oder Grenzfläche einer elektrisch betriebenen Primärlichtquelle für Photonen mit der Anregungsenergie angeordnet, so dass er durch diese Oberfläche oder Grenzfläche hindurch anregbar ist. Diese Primärlichtquelle kann insbesondere eine Dauerlichtquelle sein und/oder zu einem gegebenen Zeitpunkt mehrere Photonen pro Zeiteinheit emittieren. Eine Dauerlichtquelle als Primärlichtquelle eignet sich beispielsweise für Pump-Probe-Experimente oder für die Definition eines Zeitnormals; es werden dann periodisch einzelne Photonen emittiert mit einer Taktrate, die sich danach richtet, welche Lebensdauer der strahlende Zustand des aktiven Festkörpers hat. Die Primärlichtquelle kann aber auch, beispielsweise für Datenübertragung, in ihrer Intensität moduliert und insbesondere gepulst sein.

Es wurde erkannt, dass auf diese Weise die Miniaturisierbarkeit und einfache Handhabbarkeit elektrischer Primärlichtquellen vorteilhaft mit der Fähigkeit des aktiven Festkörpers, innerhalb einer kurzen Zeitspanne genau ein Photon zu emittieren, kombiniert werden kann. Dabei wird insbesondere ausgenutzt, dass die erfindungsgemäße Anordnung nur geringe Anforderungen an die mechanische Handhabung des aktiven Festkörpers stellt und somit deutlich kleinere aktive Festkörper verwendet werden können als nach dem bisherigen Stand der Technik. An dem Ort, in dem im aktiven Festkörper ein Übergang mit Emission eines Photons (etwa eine Rekombination) stattfindet, kann der aktive Festkörper keine weitere Anregungsenergie aufnehmen, da der entsprechende Zustand nicht frei ist. Die Anzahl dieser Zustände ist nun durch die Größe des aktiven Festkörpers nach oben begrenzt: Je kleiner der aktive Festkörper, desto größer sind die Abstände zwischen den Energieniveaus, die durch die periodischen Randbedingungen vorgegeben werden. Im Extremfall gibt es innerhalb des ganzen aktiven Festkörpers nur ein einziges durch die Primärlichtquelle anregbares Energieniveau, so dass zu keinem Zeitpunkt mehrere Photonen gleichzeitig emittiert werden können. Wenn die Primärlichtquelle selbst viele Photonen pro Zeiteinheit emittiert, ist dies kein Nachteil mehr, sofern nur der aktive Festkörper hinreichend klein ist.

Da die Photonen aus der Primärlichtquelle eine andere Wellenlänge (Energie) aufweisen als die vom aktiven Festkörper emittierten einzelnen Photonen, lassen sie sich durch eine wellenlängenabhängige Filterung ausblenden, so dass sie nicht in die weiteren Verarbeitungsstufen für die einzelnen Photonen gelangen. Hierfür können beispielsweise Wellenlängenfilter, Beschichtungen oder Kavitäten genutzt werden. Im einfachsten Fall genügt es, in der Nähe des aktiven Festkörpers eine Glasfaser anzuordnen, in deren lichtleitenden Kern nur die vom aktiven Festkörper emittierten Photonen einkoppeln, nicht jedoch die Photonen aus der Primärlichtquelle mit der nicht zu den Abmessungen des Kerns passenden Wellenlänge.

In einer besonders vorteilhaften Ausgestaltung der Erfindung weist die Lichtquelle mindestens einen Übergang zwischen zwei verschieden dotierten Halbleitern auf, der das Licht emittiert. Insbesondere kann die Lichtquelle vorteilhaft eine Leuchtdiode (LED) sein. Derartige Strukturen lassen sich in bewährter Weise in miniaturisierter Form massenhaft fertigen. Ebenso sind die aktiven Festkörper selbst massenhaft fertigbar.

In einer weiteren besonders vorteilhaften Ausgestaltung der Erfindung ist auf der Oberfläche oder Grenzfläche der Lichtquelle mindestens ein aktiver Festkörper angeordnet, der mindestens 10 µm, bevorzugt mindestens 50 µm, vom nächsten aktiven Festkörper entfernt ist. Dann kann das einzelne Photon aus genau einem aktiven Festkörper in den lichtleitenden Kern einer Glasfaser eingekoppelt werden, ohne dass ein weiterer aktiver Festkörper gleichzeitig sein einzelnes Photon in die gleiche Glasfaser einkoppelt. Auf diese Weise kann beispielsweise ein quantenkryptographischer Schlüssel sicher durch die Glasfaser übertragen werden.

In einer weiteren besonders vorteilhaften Ausgestaltung der Erfindung ist die Oberfläche oder Grenzfläche der Lichtquelle zur Aufnahme des aktiven Festkörpers lokal modifiziert. Beispielsweise können in die Oberfläche oder Grenzfläche topographische Features, wie etwa Erhöhungen oder Vertiefungen, eingebracht sein. Es kann aber auf der Oberfläche oder Grenzfläche beispielsweise auch eine weitere Schicht als Maske aufgebracht sein, die ihrerseits topographische Features enthält. Die lokale Modifikation zeichnet individuelle Orte auf der Oberfläche oder Grenzfläche aus. Werden ein oder mehrere aktive Festkörper in geeigneter Weise in Kontakt mit der Oberfläche oder Grenzfläche gebracht, können sie sich gerade an den solchermaßen ausgezeichneten Orten anlagern. Ist die Oberfläche dagegen in keiner Weise modifiziert und wird eine Vielzahl aktiver Festkörper zugeführt, beispielsweise als Nanopartikel in kolloidaler Lösung, so bilden sich auf der Oberfläche oder Grenzfläche der Lichtquelle Agglomerationen aus mehreren aktiven Festkörpern. Bei einer optischen Anregung durch die Oberfläche oder Grenzfläche hindurch werden am Ort einer solchen Agglomeration so viele Photonen emittiert wie aktive Festkörper vorhanden sind.

Vorteilhaft ist die lokale Modifikation daher derart ausgebildet, dass sie das Anlagern aktiver Festkörper, die in Kontakt mit der Oberfläche oder Grenzfläche gebracht werden, begünstigt. Dies ist beispielsweise der Fall, wenn beim Kontakt eines aktiven Festkörpers mit einer lokalen Modifikation eine größere Bindungsenergie frei wird als beim Kontakt dieses aktiven Festkörpers mit einem nicht lokal modifizierten Bereich auf der Oberfläche oder Grenzfläche. Idealerweise wird nur dann überhaupt eine Bindungsenergie frei, wenn der aktive Festkörper in Kontakt mit einer lokalen Modifikation kommt, nicht jedoch dann, wenn er in Kontakt mit anderen Bereichen auf der Oberfläche oder Grenzfläche kommt.

Alternativ oder auch in Kombination hierzu ist die lokale Modifikation vorteilhaft derart ausgebildet, dass sie für den aktiven Festkörper ein Minimum in einem Potentialfeld bildet. Ist die lokale Modifikation beispielsweise eine Vertiefung in der Oberfläche oder Grenzfläche und werden aktive Festkörper von oben an die Oberfläche oder Grenzfläche herangeführt, so kann ein aktiver Festkörper in eine solche Vertiefung hineinfallen und befindet sich dann im Schwerefeld der Erde in einem lokalen Potentialminimum. Er ist dadurch zumindest provisorisch fixiert und kann beispielsweise endgültig festgeklebt werden, nachdem die restlichen aktiven Festkörper, die nicht in Vertiefungen gefallen sind, entfernt wurden.

In einer weiteren besonders vorteilhaften Ausgestaltung der Erfindung ist die lokale Modifikation derart ausgebildet, dass sie den räumlichen Bereich definiert, aus dem die Primärlichtquelle Licht emittiert. Dann kann eine Vielzahl von aktiven Festkörpern auf engem Raum nebeneinander angeordnet sein, ohne dass die Anregung eines dieser aktiven Festkörpers durch Streulicht auch zur ungewollten Anregung weiterer aktiver Festkörper führt.

Vorteilhaft weist der aktive Festkörper mindestens eine Vorzugsrichtung dergestalt auf, dass ein aus dieser Vorzugsrichtung einfallendes Photon aus der Primärlichtquelle mit einer höheren Wahrscheinlichkeit die Emission eines einzelnen Photons anregt als ein aus einer anderen Richtung einfallendes Photon. Im Idealfall wird nahezu ausschließlich Licht, das die Primärlichtquelle aus der Vorzugsrichtung in den aktiven Festkörper einstrahlt, in einzelne Photonen umgesetzt. Dann kann eine Vielzahl erfindungsgemäßer Einzelphotonenquellen auf engem Raum nebeneinander betrieben werden, ohne dass diese sich gegenseitig beeinflussen.

Vorteilhaft ist der aktive Festkörper ein niederdimensionales halbleitendes System mit Quantenconfinement oder ein Nanodiamant mit einem Farbzentrum. Ein Farbzentrum ist eine Defektstelle, die einen strahlenden Übergang, insbesondere eine strahlende Rekombination, ermöglicht. Eine solche Defektstelle kann beispielsweise eine Gitterleerstelle sein, insbesondere eine Leerstelle in einem Silizium- oder Nickel-Gitter.

Im Rahmen der Erfindung wurde auch ein Verfahren zur Herstellung einer Einzelphotonenquelle aus einer Lichtquelle, die Photonen mit einer Anregungsenergie emittiert. Dieses Verfahren eignet sich insbesondere zur Herstellung erfindungsgemäßer Einzelphotonenquellen. Daher hat die für die Einzelphotonenquellen gegebene Offenbarung ausdrücklich auch für das Verfahren Gültigkeit und umgekehrt.

Bei dem Verfahren wird eine Oberfläche oder Grenzfläche der Lichtquelle, durch die Licht emittiert wird, zunächst an einem oder mehreren Orten lokal modifiziert. Anschließend werden ein oder mehrere aktive Festkörper, die bei Anregung durch Photonen der Anregungsenergie innerhalb einer vorgegebenen Zeitspanne ein einzelnes Photon einer geringeren Emissionsenergie emittieren, in Kontakt mit der Oberfläche oder Grenzfläche gebracht, so dass sie sich an den lokal modifizierten Orten anlagern.

Diese Anlagerung kann insbesondere darin bestehen, dass eine Bindungsenergie frei wird oder dass der aktive Festkörper in ein lokales Minimum eines Potentialfeldes gerät.

Die lokale Modifikation kann in topographischen Features bestehen, beispielsweise Erhöhungen oder Vertiefungen. Diese müssen sich nicht notwendigerweise in der Oberfläche oder Grenzfläche der Lichtquelle selbst befinden, sondern können auch in eine zusätzliche Schicht eingebracht werden, die eigens zu diesem Zweck als Maske auf die Oberfläche oder Grenzfläche aufgebracht wird.

Die lokale Modifikation muss jedoch nicht zwangsläufig dauerhaft sein. Sie kann durchaus flüchtig sein, etwa wenn die Oberfläche oder Grenzfläche zwecks lokaler Modifikation lokal elektrisch aufgeladen wird.

In einer besonders vorteilhaften Ausgestaltung der Erfindung werden der oder die angelagerten aktiven Festkörper mit der Lichtquelle verklebt. Die energetische Begünstigung, die der aktive Festkörper durch die Anlagerung erfährt, ist nicht beliebig groß und kann bei der späteren Handhabung der fertigen Einzelphotonenquelle eventuell überwunden werden, so dass der aktive Festkörper verlorengeht. Beispielsweise kann der aktive Festkörper aus einer Vertiefung herausfallen, wenn die Lichtquelle anschließend auf den Kopf gestellt wird. Die Verklebung zementiert die zunächst provisorische Anlagerung des oder der aktiven Festkörper.

Vorteilhaft werden die aktiven Festkörper aus Gebieten auf der Oberfläche oder Grenzfläche, die nicht lokal modifiziert wurden, entfernt. Dann wird die hergestellte Einzelphotonenquelle nur von lokal modifizierten Orten aus Photonen mit der Emissionsenergie emittieren. Somit kann beispielsweise sichergestellt werden, dass nur ein einziger aktiver Festkörper Licht in eine Glasfaser, die an einen bestimmten Ort gebracht wird, einkoppelt.

In einer besonders vorteilhaften Ausgestaltung der Erfindung werden die aktiven Festkörper in kolloidaler Lösung in Kontakt mit der Oberfläche oder Grenzfläche gebracht. Sie befinden sich dann in einem Lösungsmittel in einem Schwebezustand. Hierfür ist jedes Lösungsmittel geeignet, dass die Agglomeration der aktiven Festkörper untereinander verhindert, die gleichmäßige Verteilung der aktiven Festkörper fördert und sich leicht abziehen lässt. Dabei sollten die aktiven Festkörper elektrochemisch entweder nicht oder nur abstoßend mit dem Lösungsmittel wechselwirken.

Für jeden aktiven Festkörper gibt die Wellenlänge, die die emittierten einzelnen Photonen haben sollen, über die quantenmechanischen periodischen Randbedingungen die Maximalgröße vor, bis zu der er zu einer gegebenen Zeit nicht mehr als ein Photon gleichzeitig emittieren kann. Daher ist die größte laterale Ausdehnung eines jeden aktiven Festkörpers typischerweise kleiner als 100 nm. In der Lösung liegen vorteilhaft höchstens 10²¹, bevorzugt höchstens 10²⁰ und ganz besonders bevorzugt höchstens 10¹⁹ aktive Festkörper pro Kubikzentimeter vor. 10²¹ aktive Festkörper pro Kubikzentimeter sind optimal für 1 nm kleine aktive Festkörper; für größere aktive Festkörper wird dieses Optimum proportional kleiner.

Bietet ein lokal modifizierter Ort auf der Oberfläche oder Grenzfläche auch nur einen geringen energetischen Anreiz zur Anlagerung eines aktiven Festkörpers, kann der aktive Festkörper diesem Anreiz folgen, ohne störende externe Widerstände überwinden zu müssen. Alle nicht angelagerten aktiven Festkörper verbleiben in dem Schwebezustand und können mit dem Lösungsmittel entfernt werden, ohne dass hierbei Kräfte auf die bereits angelagerten aktiven Festkörper ausgeübt werden, die diese wieder ablösen können.

### Spezieller Beschreibungsteil

Nachfolgend wird der Gegenstand der Erfindung anhand von Figuren erläutert, ohne dass der Gegenstand der Erfindung hierdurch beschränkt wird. Es ist gezeigt:

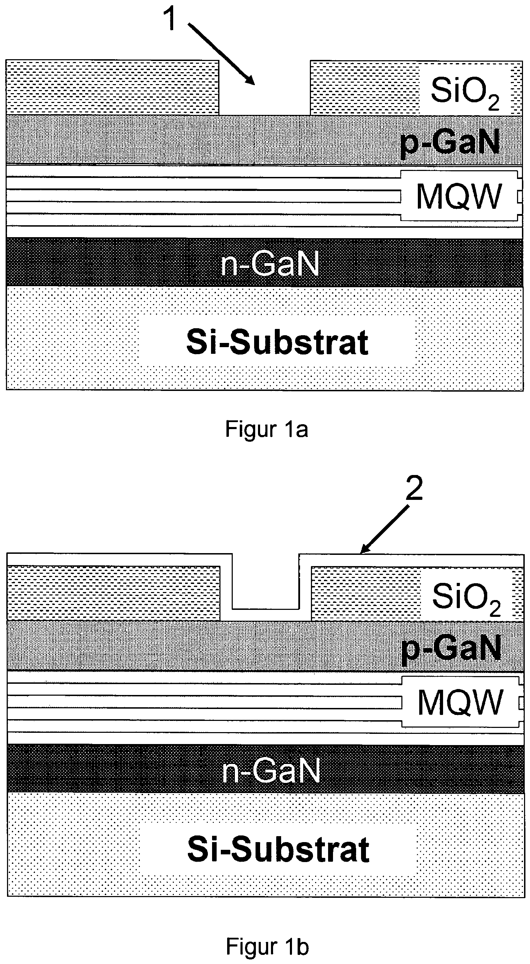

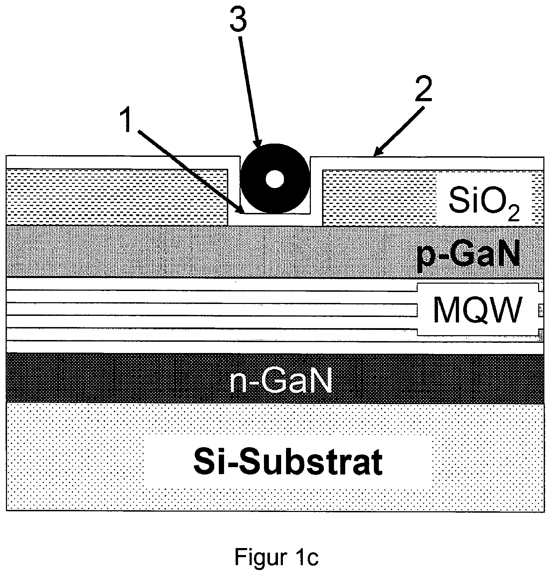

Figur 1: Ausführungsbeispiel der erfindungsgemäßen Einzelphotonenquelle.

Figur 1 zeigt ein Ausführungsbeispiel der erfindungsgemäßen Einzelphotonenquelle in schematischer Schnittzeichnung in verschiedenen Stadien der Herstellung. Auf einem Si-Substrat ist zwischen zwei Schichten aus n-GaN und p-GaN eine Multiquantumwell (MQW)-LED-Struktur aufgewachsen, die bei Anlegen einer elektrischen Spannung zwischen n-GaN und p-GaN Licht emittiert. Die p-GaN-Schicht ist durch eine Deckschicht aus SiO₂ elektrisch isoliert mit Ausnahme einer nachträglich in diese Deckschicht eingebrachten Aussparung 1 (Figur 1a). Eine anschließend aufgebrachte transparente Topelektrode 2, die sowohl das SiO₂ als auch Wände und Boden der Aussparung 1 bedeckt, kontaktiert nur am Boden der Aussparung das p-GaN. Wird eine Spannung zwischen diese Topelektrode 2 und das n-GaN angelegt, wird somit auch die MQW-Struktur nur im Bereich der Aussparung zur Lichtemission angeregt (Figur 1 b). Das Primärlicht der LED durchdringt die transparente Topelektrode 2 und gelangt zu dem nach dem Aufbringen der Topelektrode 2 in die Aussparung 1 eingebrachten aktiven Festkörper 3 (Figur 1 c). Dieser kann ein kollodiales Nanopartikel sein, das zuvor aus einer Lösung abgeschieden wurde. Er kann aber auch ein Nanodiamant mit einem Farbzentrum sein, das beispielsweise eine Leerstelle in einem Silizium- oder Nickel-Gitter ist. Dadurch wird der aktive Festkörper 3 innerhalb einer vorgegebenen Zeitspanne zur Emission genau eines Photons angeregt.

## Patentansprüche

1. Einzelphotonenquelle, umfassend mindestens einen aktiven Festkörper (3), der bei Anregung mit Licht, dessen Photonen jeweils eine Anregungsenergie aufweisen, in einer vorgegebenen Zeitspanne ein einzelnes Photon einer geringeren Emissionsenergie emittiert,
wobei der aktive Festkörper auf einer Oberfläche oder Grenzfläche einer elektrisch betriebenen Primärlichtquelle für Photonen mit der Anregungsenergie angeordnet ist, so dass er durch diese Oberfläche oder Grenzfläche hindurch anregbar ist, **dadurch gekennzeichnet, dass** es im aktiven Festkörper nur ein einziges durch die Primärlichtquelle anregbares Energieniveau gibt.

2. Einzelphotonenquelle nach Anspruch 1, **dadurch gekennzeichnet, dass** die größte laterale Ausdehnung des aktiven Festkörpers kleiner als 100 nm ist.

3. Einzelphotonenquelle nach einem der Ansprüche 1 bis 2, **dadurch gekennzeichnet, dass** die Lichtquelle mindestens einen Übergang zwischen zwei verschieden dotierten Halbleitern aufweist, der das Licht emittiert.

4. Einzelphotonenquelle nach Anspruch 3, **dadurch gekennzeichnet, dass** die Lichtquelle eine Leuchtdiode (LED) ist.

5. Einzelphotonenquelle nach einem der Ansprüche 1 bis 4, **dadurch gekennzeichnet, dass** auf der Oberfläche oder Grenzfläche der Lichtquelle mindestens ein aktiver Festkörper angeordnet ist, der mindestens 10 µm, bevorzugt mindestens 50 µm, vom nächsten aktiven Festkörper entfernt ist.

6. Einzelphotonenquelle nach einem der Ansprüche 1 bis 5, **dadurch gekennzeichnet, dass** die Grenzfläche oder Oberfläche der Lichtquelle zur Aufnahme des aktiven Festkörpers lokal modifiziert ist.

7. Einzelphotonenquelle nach Anspruch 6, **dadurch gekennzeichnet, dass** die lokale Modifikation derart ausgebildet ist, dass sie das Anlagern aktiver Festkörper, die in Kontakt mit der Oberfläche oder Grenzfläche gebracht werden, begünstigt.

8. Einzelphotonenquelle nach einem der Ansprüche 6 bis 7, **dadurch gekennzeichnet, dass** die lokale Modifikation derart ausgebildet ist, dass beim Kontakt eines aktiven Festkörpers mit ihr eine größere Bindungsenergie frei wird als beim Kontakt dieses aktiven Festkörpers mit einem nicht lokal modifizierten Bereich auf der Oberfläche oder Grenzfläche der Lichtquelle.

9. Einzelphotonenquelle nach einem der Ansprüche 6 bis 8, **dadurch gekennzeichnet, dass** die lokale Modifikation derart ausgebildet ist, dass sie für den aktiven Festkörper ein Minimum in einem Potentialfeld bildet.

10. Einzelphotonenquelle nach einem der Ansprüche 6 bis 9, **dadurch gekennzeichnet, dass** die lokale Modifikation derart ausgebildet ist, dass sie den räumlichen Bereich definiert, aus dem die Primärlichtquelle Licht emittiert.

11. Einzelphotonenquelle nach einem der Ansprüche 1 bis 10, **dadurch gekennzeichnet, dass** der aktive Festkörper mindestens eine Vorzugsrichtung dergestalt aufweist, dass ein aus dieser Vorzugsrichtung einfallendes Photon aus der Primärlichtquelle mit einer höheren Wahrscheinlichkeit die Emission eines einzelnen Photons anregt als ein aus einer anderen Richtung einfallendes Photon.

12. Einzelphotonenquelle nach einem der Ansprüche 1 bis 11, **dadurch gekennzeichnet, dass** der aktive Festkörper ein niederdimensionales halbleitendes System mit Quantenconfinement oder ein Nanodiamant mit einem Farbzentrum ist.

13. Verfahren zur Herstellung einer Einzelphotonenquelle aus einer Lichtquelle, die Photonen mit einer Anregungsenergie emittiert, mit den Schritten:
• eine Oberfläche oder Grenzfläche der Lichtquelle, durch die Licht emittiert wird, wird an einem oder mehreren Orten lokal modifiziert;
• ein oder mehrere aktive Festkörper, die bei Anregung durch Photonen der Anregungsenergie in einer vorgegebenen Zeitspanne ein einzelnes Photon einer geringeren Emissionsenergie emittieren, werden in Kontakt mit der Oberfläche oder Grenzfläche gebracht, so dass sie sich an den lokal modifizierten Orten anlagern.

14. Verfahren nach Anspruch 13, **dadurch gekennzeichnet, dass** in die Oberfläche oder Grenzfläche topographische Features als lokale Modifikationen eingebracht werden.

15. Verfahren nach einem der Ansprüche 13 bis 14, **dadurch gekennzeichnet, dass** die Oberfläche oder Grenzfläche zwecks lokaler Modifikation lokal elektrisch aufgeladen wird.

16. Verfahren nach einem der Ansprüche 13 bis 15, **dadurch gekennzeichnet, dass** der oder die angelagerten aktiven Festkörper mit der Lichtquelle verklebt werden.

17. Verfahren nach einem der Ansprüche 13 bis 16, **dadurch gekennzeichnet, dass** die aktiven Festkörper aus Gebieten auf der Oberfläche oder Grenzfläche, die nicht lokal modifiziert wurden, entfernt werden.

18. Verfahren nach einem der Ansprüche 13 bis 17, **dadurch gekennzeichnet, dass** die aktiven Festkörper in kolloidaler Lösung in Kontakt mit der Oberfläche oder Grenzfläche gebracht werden.

## Claims

1. Single photon source comprising at least one active solid state body, which upon excitation with light, whose photons in each instance have an excitation energy, over a pre-determined period emits a single photon with a lower emission energy, in the course of which the active solid state body is arranged on a surface or interface of an electrically operated primary light source for photons with the excitation energy so that it can be excited through this surface or interface, **characterised in that** in the active solid state body there is only a single excitable energy level that can be excited by the primary light source.

2. Single photon source in accordance with claim 1, **characterised in that** the largest lateral dimension of the active solid state body is smaller than 100 nm.

3. Single photon source in accordance with one of claims 1 to 2, **characterised in that** the light source has at least one transition circuit between two differently doped semi-conductors which emits the light.

4. Single photon source in accordance with claim 3, **characterised in that** the light source is a light emitting diode.

5. Single photon source in accordance with one of claims 1 to 4, **characterised in that** one the surface or interface of the light source at least one active solid state body is arranged which is spaced at least 10 µm, preferably at least 50 µm, from the next active solid state body.

6. Single photon source in accordance with one of claims 1 to 5, **characterised in that** the surface or interface of the light source is locally modified to accommodate the active solid state body.

7. Single photon source in accordance with claim 6, **characterised in that** the local modification is designed in such a manner that it benefits the attachment of active solid state bodies which are brought into contact with the surface or interface.

8. Single photon source in accordance with one of claims 6 to 7, **characterised in that** the local modification is designed in such a manner that it becomes free when in contact with an active solid state body with its greater binding energy than when this active solid state body is in contact with an area not modified locally on the surface or interface of the light source.

9. Single photon source in accordance with one of claims 6 to 8, **characterised in that** the local modification is designed in such a manner that it forms a minimum in a potential field for the active solid state body.

10. Single photon source in accordance with one of claims 6 to 9, **characterised in that** the local modification is designed in such a manner that it defines the spatial area from which the primary light source emits light.

11. Single photon source in accordance with one of claims 1 to 10, **characterised in that** the active solid state body has at least one preferred direction to such an extent that a photon penetrating from this preferred direction from the primary light source is much more likely to excite the emission of a single proton than a photon penetrating from another direction.

12. Single photon source in accordance with one of claims 1 to 11, **characterised in that** the active solid state body is a low-dimensional semi-conductive system with quantum confinement or a nano-diamond with a colour centre.

13. Process for manufacturing a single photon source consisting of a light source which emits photons with an excitation energy with the steps:
➢ a surface or an interface of the light source through which the light is emitted is modified locally in one or several places;
➢ one or more active solid state bodies, which, when excited by photons, emit a single photon with a lower emission energy in a pre-determined period, are brought into contact with the surface or interface so that they are attached to the locally modified places.

14. Process in accordance with claim 13, **characterised in that** topographical features are placed in the surface or interface as local modifications.

15. Process in accordance with one of claims 13 to 14, **characterised in that** the surface or interface is electrically charged for the purpose of local modification.

16. Process in accordance with one of claims 13 to 15, **characterised in that** the attached active solid state body or bodies are bonded with the light source.

17. Process in accordance with one of claims 13 to 16, **characterised in that** the active solid state bodies are spaced apart from areas on the surface or interface which have not been locally modified.

18. Process in accordance with one of claims 13 to 17, **characterised in that** the active solid state bodies in colloidal solution are brought into contact with the surface or interface.

## Revendications

1. Source monophotonique, comprenant au moins un corps solide (3) actif, qui émet, en cas d'excitation avec de la lumière, dont les photons présentent respectivement une énergie d'excitation, dans un laps de temps prédéfini, un unique photon d'une énergie d'émission plus faible,
dans laquelle
le corps solide actif est disposé sur une surface ou une interface d'une source de lumière primaire à fonctionnement électrique pour des photons à énergie d'excitation si bien qu'il peut être excité au travers de ladite surface ou interface, **caractérisée en ce que** le corps solide actif ne comprend qu'un unique niveau d'énergie pouvant être excité par la source de lumière primaire.

2. Source monophotonique selon la revendication 1, **caractérisée en ce que** l'extension latérale la plus grande du corps solide actif est inférieure à 100 nm.

3. Source monophotonique selon l'une quelconque des revendications 1 à 2, **caractérisée en ce que** la source de lumière présente au moins un passage entre deux semi-conducteurs dopés différents, lequel passage émet la lumière.

4. Source monophotonique selon la revendication 3, **caractérisée en ce que** la source de lumière est une diode électroluminescente (DEL).

5. Source monophotonique selon l'une quelconque des revendications 1 à 4, **caractérisée en ce qu'**au moins un corps solide actif est disposé sur la surface ou l'interface de la source de lumière, lequel est éloigné au moins de 10 µm, de manière préférée d'au moins 50 µm, du corps solide active le plus proche.

6. Source monophotonique selon l'une quelconque des revendications 1 à 5, **caractérisée en ce que** l'interface ou la surface de la source de lumière est modifiée localement afin de recevoir le corps solide actif.

7. Source monophotonique selon la revendication 6, **caractérisée en ce que** la modification locale est réalisée de telle manière qu'elle favorise l'accumulation de corps solides actifs, qui sont amenés en contact avec la surface ou l'interface.

8. Source monophotonique selon l'une quelconque des revendications 6 à 7, **caractérisée en ce que** la modification locale est réalisée de telle manière qu'en cas de contact d'un corps solide actif avec ladite surface ou interface, une plus grande énergie de liaison est libérée que dans le cas du contact dudit corps solide actif avec une zone non modifiée localement sur la surface ou l'interface de la source de lumière.

9. Source monophotonique selon l'une quelconque des revendications 6 à 8, **caractérisée en ce que** la modification locale est réalisée de telle manière qu'elle forme pour le corps solide actif un minimum dans un champ de potentiel.

10. Source monophotonique selon l'une quelconque des revendications 6 à 9, **caractérisée en ce que** la modification locale est réalisée de telle manière qu'elle définit la zone spatiale, depuis laquelle la source de lumière primaire émet de la lumière.

11. Source monophotonique selon l'une quelconque des revendications 1 à 10, **caractérisée en ce que** le corps solide actif présente au moins une direction de prédilection de telle manière qu'un photon incident depuis ladite direction de prédilection, provenant de la source de lumière primaire excite, avec une probabilité plus élevée, l'émission d'un unique photon qu'un photon incident depuis une direction autre.

12. Source monophotonique selon l'une quelconque des revendications 1 à 11, **caractérisée en ce que** le corps solide actif est un système semi-conducteur à faible dimension présentant un confinement quantique ou un nanodiamant pourvu d'un centre coloré.

13. Procédé servant à produire une source monophotonique à partir d'une source de lumière, qui émet des photons à énergie d'excitation, comprenant les étapes :
- une surface ou interface de la source de lumière, laquelle émet de la lumière, est modifiée localement en un ou en plusieurs emplacements ;
- un ou plusieurs corps solides actifs, qui émettent, en cas d'excitation par des photons de l'énergie d'excitation dans un laps de temps prédéfini, un unique photon d'une énergie d'émission plus faible, sont en contact avec la surface ou l'interface si bien qu'ils s'accumulent en les emplacements localement modifiés.

14. Procédé selon la revendication 13, **caractérisé en ce que** des caractéristiques topographiques sont pratiquées en tant que modifications locales dans la surface ou l'interface.

15. Procédé selon l'une quelconque des revendications 13 à 14, **caractérisé en ce que** la surface ou l'interface sont chargées localement de manière électrique aux fins de la modification locale.

16. Procédé selon l'une quelconque des revendications 13 à 15, **caractérisé en ce que** le ou les corps solides actifs accumulés sont collés à la source de lumière.

17. Procédé selon l'une quelconque des revendications 13 à 16, **caractérisé en ce que** les corps solides actifs sont supprimés des régions sur la surface ou interface, qui n'ont pas été modifiées localement.

18. Procédé selon l'une quelconque des revendications 13 à 17, **caractérisé en ce que** les corps solides actifs sont amenés en contact, dans la solution colloïdale, en contact avec la surface ou l'interface.
